# FASCICULE DE BREVET EUROPEEN

(11) **EP 2 632 876 B1**
(45) Date de publication et mention de la délivrance du brevet: **08.11.2017**
(21) Numéro de dépôt: 11787735.7
(22) Date de dépôt: 25.10.2011
(51) Int. Cl.: C04B 24/12, C04B 41/53, C04B 41/72, C04B 40/00, B01F 17/16, B01D 17/04

(54) **DÉSACTIVANT DE SURFACE ÉLIMINABLE À SEC**
IM TROCKENEN ZUSTAND ENTFERNBARER OBERFLÄCHENDEAKTIVATOR
SURFACE DEACTIVATOR THAT CAN BE REMOVED WHEN DRY

(30) Priorité: 26.10.2010 FR 1058791
(43) Date de publication de la demande: 04.09.2013
(73) Titulaire: Chryso, 92440 Issy-Les-Moulineaux (FR)
(72) Inventeur: PELLERIN, Bruno, F-77210 Avon (FR); MATEO, Sandrine, F-77760 Ury (FR); LACHENAUD, Sophie, F-75018 Paris (FR)
(74) Mandataire: Lavoix
(86) Numéro de dépôt international: PCT/FR2011/052487
(87) Numéro de publication internationale: WO 2012/056162

(56) Documents cités:
- EP-A1- 1 661 874
- EP-A2- 0 861 686
- EP-A2- 1 526 120
- CA-A- 666 432

## Description

La présente invention concerne une émulsion utile en particulier à titre de désactivant de surface de béton susceptible d'être éliminé à sec.

Un désactivant de surface permet de retarder l'hydratation du ciment à la surface non coffrée d'un béton. Après le temps habituel de prise, la matrice cimentaire à prise retardée en surface peut être éliminée par lavage, ce qui permet de rendre les granulats apparents et d'obtenir des effets esthétiques particuliers recherchés.

Il est connu de formuler un désactivant de surface sous forme de solution aqueuse d'un agent retardateur de prise.

Afin de protéger la surface contre les intempéries pendant la prise, il est par ailleurs connu de suspendre l'agent retardateur de prise dans une solution solvantée de résine. Les désactivants de surface en phase solvant dégagent toutefois des COV (Composés Organiques Volatiles) nocifs pour l'utilisateur et l'environnement.

Afin d'éviter les problèmes liés à la présence de solvants, le document EP1526120 propose un désactivant de surface sous forme de suspension d'un retardateur de prise dans une huile végétale. Ces formulations forment avec le ciment retardé des croûtes grasses en surface qui sont très difficiles à enlever après 24 h. Ces formulations imposent alors un respect strict de la durée d'application de 8 à 24h, ce qui pose en pratique des difficultés de planning dans l'organisation du chantier.

Le document EP861686 A2 décrit une émulsion constituée majoritairement de bitume assimilé à une phase huileuse comprenant comme émulsifiant une composition de suif-propylène diamine. Elle est utilisée pour l'enrobage de matériaux à usage routier.

En outre, toutes ces formulations présentent un problème majeur commun dans la mesure où elles requièrent une élimination par lavage à l'eau surpressée, typiquement sous 100 à 150 bars. Ce procédé génère des quantités importantes (typiquement > 1 m³ pour 100 m²) d'eau fortement alcaline (pH >12) et très chargée en matières en suspension (MES > 100g/l). Le rejet de ces eaux pose des problèmes de pollution et peut par ailleurs provoquer le colmatage des réseaux de collecte du fait du redurcissement dans le temps de la matrice cimentaire éliminée.

L'objectif de la présente invention était alors de proposer une formulation de désactivant en surface qui ne présente pas les inconvénients cités. En particulier, il était recherché de proposer une formulation de désactivant de surface qui assure une protection rapide et efficace de la surface et qui évite les problèmes posés par les eaux de lavage.

Cet objectif est atteint selon l'invention par une formulation sous forme d'émulsion qui se rompt au contact d'un béton de ciment à l'état frais et qui est éliminable pendant une période excédant 24h.

La formulation de l'émulsion selon l'invention dérive de celle des émulsions routières de bitume dans lesquelles le bitume fondu est émulsionné avec une solution aqueuse d'acide et additionné d'un tensioactif aminé non quaternaire. L'émulsion est stable et peut être pulvérisée sur les routes. Cependant, au contact du sol comportant des gravillons alcalins ou par ajout de chaux ou de ciment portland, le tensioactif aminé non quaternaire, protoné en milieu acide, précipite en milieu alcalin par déprotonation, provoquant alors la rupture immédiate de l'émulsion.

Dans les émulsions de bitume, la nature de l'acide importe peu et on utilise généralement des acides minéraux tels que l'acide chlorhydrique. Dans l'émulsion selon l'invention en contraste, l'acide est un constituant spécifique puisqu'il assure en outre une seconde fonction. En effet, outre d'assurer la solubilisation du tensioactif aminé non quaternaire en abaissant le pH de la phase aqueuse, il agit comme agent retardateur de prise de la composition hydraulique.

Aussi, selon un premier aspect, l'émulsion selon l'invention est constituée d'une phase huileuse dispersée dans une phase aqueuse qui comprend un tensioactif aminé non quaternaire et un acide à effet retardateur de prise, caractérisée en ce que le tensioactif aminé non quaternaire est une diamine comme spécifiée dans la revendication 1, et en ce que l'émulsion comprend de 5 à 40% en poids de phase huileuse.

On entend par le terme « acide à effet retardateur de prise » un acide qui a pour effet, lorsqu'il est ajouté à une composition hydraulique, de retarder son durcissement par prise hydraulique comparé à la même composition hydraulique dépourvu d'un tel agent.

On entend dans le présent exposé sous le terme « composition hydraulique » les compositions durcissant par suite d'hydratation, et en particulier des compositions à base de ciment de Portland comme le béton et le mortier. Particulièrement visées sont les compositions hydrauliques susceptibles de comporter des granulats esthétiquement attractifs comme des gravillons de type quartz, marbre ou granite.

L'acide à effet retardateur de prise a de préférence un pK_{A} compris entre 2 et 5. De préférence, l'acide à effet retardateur de prise est un acide carboxylique ou hydroxycarboxylique. L'acide carboxylique ou hydrocarboxylique peut comporter une chaîne carbonée saturée ou insaturée et posséder un, deux ou trois groupes carboxyliques ainsi que le cas échéant un, deux, trois ou plus de groupes hydroxyle.

L'acide à effet retardateur de prise peut également être présent dans l'émulsion sous forme de sel correspondant, notamment du sodium, potassium ou calcium.

L'acide à effet retardateur de prise peut être choisi notamment dans le groupe consistant en l'acide acétique, l'acide gluconique, l'acide citrique, l'acide tartrique, l'acide malique et leurs sels et mélanges. L'acide citrique, l'acide tartrique et l'acide malique et leurs sels et mélanges sont préférés.

Le dosage en acide à effet retardateur de prise dans l'émulsion selon l'invention peut être choisi selon l'application envisagée. En effet, pour un acide donné, une concentration plus élevée permettra l'obtention d'un effet désactivant plus profond. Le plus souvent, la teneur en acide à effet retardateur sera comprise entre 1 à 20%, de préférence 1 à 15% en poids de l'émulsion.

L'émulsion selon l'invention contient par ailleurs un tensioactif aminé non quaternaire à titre d'émulsifiant. Un tensioactif a une structure amphiphile qui lui confère une affinité particulière pour les interfaces de type huile/eau. Le caractère plutôt hydrophile ou hydrophobe d'un tensioactif est souvent exprimé par la balance hydrophile/lipophile (HLB). Le tensioactif aminé non quaternaire présente de préférence un indice HLB compris dans la plage de 2-18, et plus particulièrement de 2 à 8.

Les amines non quaternaires sont susceptibles d'être protonées en milieu acide, formant ainsi des groupes ammonium à charge positive. Cependant, lorsque le pH du milieu devient alcalin au contact avec la composition hydraulique, le tensioactif perd sa charge et précipite, conduisant à la rupture de l'émulsion.

Le tensioactif aminé non quaternaire est une diamine de formule suivante : 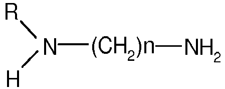 dans laquelle R est une chaîne carbonée saturée ou insaturée, aliphatique ou aromatique, droite ou ramifiée comportant 8 à 22 atomes de carbone, et de préférence 12 à 18 atomes de carbone et n un nombre entier compris entre 1 et 8 et de préférence de 2 à 4.

Les amines dérivées de matières grasses d'origine végétale ou animale sont économiques et faciles d'accès et de ce fait particulièrement intéressantes. Le tensioactif aminé non quaternaire peut être choisi en particulier dans le groupe consistant en la diamine de suif, de stéarine, d'oléine, d'huile de coprah, de palme, de colza, de colza érucique ou de soja.

L'émulsion selon l'invention comprend de préférence 0,01 à 10% et en particulier 0,01 à 5% en poids de tensioactif aminé non quaternaire.

L'émulsion selon l'invention peut également contenir un ou plusieurs sucres. La présence de sucre dans l'émulsion permet d'augmenter la profondeur d'action du désactivant de surface. Ainsi, une émulsion selon l'invention formulée pour dégager en surface des granulats de taille plus importante comprendra de préférence en outre un sucre.

On entend par le terme « sucre » dans le contexte de la présente invention des carbohydrates tels que le glucose, le dextrose, le fructose, le galactose, le saccharose, le maltose, le lactose et le mannose et leurs mélanges. Parmi ces sucres, le dextrose est préféré.

L'émulsion selon l'invention comprend de préférence 0 à 20% et en particulier 2 à 10% en poids de sucre.

On entend par le terme « phase huileuse » dans le cadre de ce document, une phase non aqueuse hydrophobe, non miscible avec l'eau et liquide à température ambiante.

La phase huileuse peut comporter des matières grasses d'origines végétales, animales ou minérales, qui peuvent être liquides à température ambiante ou non. Toutefois, lorsqu'elles ne sont pas liquides à température ambiante, l'émulsion est préparée de préférence à chaud, comme décrit plus loin. L'émulsion selon l'invention est de préférence une émulsion non bitumeuse. Avantageusement, elle ne comporte donc pas d'hydrocarbures naphténiques ou aromatiques. Elle peut cependant contenir des huiles minérales aliphatiques. Par ailleurs, elle est avantageusement dépourvue d'un produit de cure, du type polymère acrylique ou cire.

Parmi la grande variété de matières grasses envisageables, on peut mentionner en particulier les huiles végétales choisies parmi l'huile de colza, l'huile de palme, l'huile de coprah, l'huile de ricin, l'huile d'arachide, l'huile de pépin de raisin, l'huile de maïs, l'huile de canola, l'huile de lin, l'huile de noix de coco, l'huile de soja et leurs mélanges.

Les huiles animales peuvent être choisies en particulier parmi le suif, la suintine, l'huile de lard, l'huile de hareng, l'huile de foie de morue, l'huile de sardine, l'huile de poisson et l'huile de lanoline et leurs mélanges.

Les huiles minérales incluent en particulier les fractions comportant en moyenne 18 à 22 atomes de carbone, notamment l'huile minérale claire.

La quantité de phase huileuse dans l'émulsion selon l'invention peut varier largement. Généralement l'émulsion comprend 5 à 50% en poids, de préférence 10 à 40% en poids de phase huileuse et 50 à 95%, de préférence 60 à 90% en poids de phase aqueuse.

Avantageusement, l'émulsion est stable au stockage. Afin de faciliter l'application, par exemple par pulvérisation, elle présente de préférence une faible viscosité à l'écoulement, par exemple comprise entre 10 et 50 s (temps d'écoulement d'une coupe AFNOR n°4).

### [Procédé de préparation de l'émulsion]

Selon un second aspect, l'invention concerne un procédé de préparation d'une émulsion telle que décrite ci-dessus.

L'émulsion selon l'invention est facile à préparer par des procédés connus en tant que tels et ne nécessite aucun équipement spécifique. En particulier, elle est accessible par un procédé comprenant les étapes consistant à :
(i) préparer la phase aqueuse comprenant l'acide retardateur de prise, le tensioactif aminé non quaternaire, et le cas échéant les autres adjuvants ;
(ii) préparer la phase huileuse; et
(iii) mélanger des deux phases dans un dispositif adapté jusqu'à obtention d'une émulsion.

Comme évoqué ci-dessus, lorsqu'un ou plusieurs constituants de la phase huileuse sont solides à température ambiante, il est préférable de les chauffer afin d'assurer un mélange homogène et en particulier une répartition homogène du tensioactif aminé non quaternaire. Dans ce cas, il est recommandé de chauffer également la phase aqueuse à une température voisine.

La phase aqueuse comprendra un ou plusieurs acides retardateurs de prise ainsi que le cas échéant un ou plusieurs sucres. La phase aqueuse peut également contenir d'autres adjuvants habituels tels que des agents anti-mousses, des épaississants, des colorants et des opacifiants. Elle peut par ailleurs également contenir des dispersants et résines de pétrole, notamment en vue d'améliorer les performances de cure.

Un dispositif adapté pour la réalisation de l'étape (iii) du procédé décrit ci-dessus est par exemple un mélangeur de type émulsificateur.

On obtient une émulsion homogène stable au stockage, de faible viscosité et de ce fait facilement pulvérisable sur la surface à désactiver.

### [Procédé d'utilisation de l'émulsion]

Comme évoqué ci-dessus, l'émulsion selon l'invention est particulièrement utile pour la désactivation en surface de compositions hydrauliques, notamment de bétons.

Aussi, selon un troisième aspect, l'invention vise un procédé de désactivation en surface d'une composition hydraulique, comprenant les étapes consistant à :
(a) mise en forme de la composition hydraulique ;
(b) application sur la surface de la composition hydraulique de l'émulsion selon l'invention, laquelle en se rompant libère la phase huileuse; et
(c) après durcissement de la composition hydraulique, élimination du film formé avec la couche superficielle de composition hydraulique non durcie.

Avantageusement, l'étape (a) est réalisée par coulage. Le béton à désactiver peut aussi être mis en place par talochage, et si nécessaire, par vibration.

L'étape (b) d'application sur la surface de la composition hydraulique est aisément réalisée par pulvérisation.

De manière surprenante, l'émulsion est efficace au même dosage qu'une formulation classique.

De préférence, l'application de l'émulsion est efficace lorsqu'elle est réalisée à raison de 100 à 400 g/ m² et de préférence de 150 à 250 g/ m².

Au contact de la composition hydraulique fraîche, l'émulsion selon l'invention se rompt instantanément pour former une couche protectrice hydrofuge continue alors que les matières actives, notamment le retardateur de prise diffuse dans la couche superficielle de la composition hydraulique pour y engendrer le retard de prise.

Après 12 à 24 heures de durcissement de la masse de la composition hydraulique, la surface à prise retardée présente un aspect sec. Il est alors possible de dégager les granulats par élimination du film formé et de la couche superficielle de la composition hydraulique. Cette étape peut être réalisée comme habituellement par lavage au jet d'eau.

Cependant, l'un des avantages principaux de l'émulsion selon l'invention constitue le fait qu'elle est susceptible d'être éliminée à sec, c'est-à-dire sans utilisation d'eau, jusqu'à 96 heures, contrairement aux désactivants traditionnels qui s'éliminent très difficilement après 24 heures. Aussi, selon un mode de réalisation préféré du procédé, l'étape (c) est réalisée à sec, par exemple par brossage, notamment au moyen d'une brosse rotative.

Avantageusement, les résidus sont aspirés simultanément à l'aide d'un dispositif aspirant couplé à la brosse.

La surface peut être aisément débarrassée de la couche superficielle comportant le ciment retardé et l'émulsion selon l'invention et on obtient une surface faisant apparaître les granulats pour conduire à l'aspect esthétique recherché.

Sans vouloir être lié par une théorie particulière, il est supposé que ces effets surprenants sont dus à la formation d'un film aqueux superposé d'un film huileux à la rupture de l'émulsion au contact de la surface. Du fait de son affinité particulière, la phase aqueuse forme un film aqueux sur la surface de la composition hydraulique alors que la phase huileuse forme un film huileux disposé au-dessus du film aqueux.

Contrairement aux formulations conventionnelles, ces films peuvent être très homogènes, voire continus grâce au mécanisme particulier de rupture de l'émulsion. L'émulsion selon l'invention permet alors l'obtention d'une combinaison d'effets spécifiques en ce que la couche aqueuse assure une diffusion homogène du retardateur de prise dans les couches superficielles de la composition hydraulique et empêche en même temps la pénétration de la phase huileuse dans la composition hydraulique et la formation de croûtes grasses. D'autre part, le film huileux assure par son effet de cure une protection efficace de la surface à l'évaporation et aux intempéries et empêche ainsi le séchage du béton.

Ainsi, l'émulsion selon l'invention permet d'obtenir la formation d'une surface très homogène friable susceptible d'être éliminée à sec pendant une durée prolongée, allant jusqu'à 96 heures. Son application peut alors être réalisée dans des circonstances très variées, y compris en fin de semaine, sans nécessité d'un suivi précis.

### [Utilisation]

Comme évoqué précédemment, l'émulsion décrite est particulièrement utile à titre de désactivant de surface de compositions hydrauliques, notamment en raison du fait qu'elle est susceptible d'être éliminée à sec, par exemple par brossage.

Aussi, selon un dernier aspect, l'invention vise l'utilisation d'une émulsion décrite pour la désactivation en surface de compositions hydrauliques, notamment de bétons.

L'utilisation peut se faire en particulier par application sur la surface de la composition hydraulique fraîchement mise en forme, comme expliqué précédemment.

L'invention sera décrite plus en détail dans les exemples qui suivent, donnés à titre purement illustratif.

### EXEMPLES

### EXEMPLE 1

Dans un récipient adapté d'une capacité de 1501 et équipé de moyens de chauffage et d'agitation, on introduit 68.9 kg d'eau et on chauffe à 50°C puis on introduit 7,5 kg d'acide citrique en agitant. Une fois l'acide dissout, on introduit 2,4 kg de diamine de suif chauffée préalablement à la même température tout en assurant un brassage énergique. Au mélange ainsi obtenu, on ajoute les adjuvants, à savoir 1,6 kg d'un agent anti-mousse, 1,6 kg d'un épaississant et 3 kg d'un pigment opacifiant.

A la phase aqueuse ainsi préparée, on ajoute la phase huileuse composée de 8,5 kg de suintine et 6,5 kg d'huile minérale claire chauffée au préalable à une température de 50°C et on poursuit le brassage énergique, jusqu'à obtention d'une émulsion fine.

Après refroidissement, on obtient une émulsion d'un aspect blanc laiteux stable au stockage, d'une viscosité de 18 secondes sur Coupe AFNOR n°4. Le tableau 1 ci-dessous rappelle la composition de l'émulsion préparée.

**Tableau 1 : Composition de l'émulsion**

| **Constituant** | **Quantité [kg]** |
|---|---|
| **Phase aqueuse :** | |
| Eau | 68,90 |
| Acide citrique | 7,50 |
| Agent anti-mousse | 1,60 |
| Epaississant | 1,60 |
| Pigment Opacifiant | 3,00 |
| Diamine grasse de suif | 2,40 |

| **Phase huileuse :** | |
|---|---|
| Suintine | 8,50 |
| Huile minérale claire | 6,50 |
| **Total** | **100,00** |

L'émulsion obtenue a été pulvérisée telle quelle sur une surface de béton frais de composition donnée dans le tableau 2 ci-dessous avec un dosage de 200 g/m². Au bout de quelques minutes, on constate la formation d'un film protecteur hydrofuge qui sèche rapidement.

Après 24 heures, le béton avait pris en profondeur et la surface était sèche, mais friable. Le film et la couche superficielle du béton ont été éliminés aisément au moyen d'une brosse équipée d'un dispositif d'aspiration (Fabricant Eureka) pour dégager les granulats sous-jacents.

Le même test a été reconduit après 96 heures en extérieur par temps sec et température de 25°C en journée et 15°C la nuit, avec des résultats identiques.

Comme les désactivants de surface classiques, l'émulsion selon l'invention peut être déclinée en plusieurs profondeurs de creuses en jouant sur la formulation du système de retardateur de prise et en ajoutant le cas échéant un ou plusieurs sucres.

**Tableau 2 : Composition du béton**

| **Constituant** | **Quantité [**kg/m³**]** |
|---|---|
| CEMI 52.5NSPLC | 330 |
| Gravier 6/10 Lampourdier | 1290 |
| Sable 0/4 Bernières | 630 |
| CHRYSO® Air G100 | 0,05% |
| CHRYSO® Plast CER | 0,35% |
| Eau | 180 |
| Total | 2432,8 |

L'effet de cure obtenu avec l'émulsion selon l'exemple a été évalué en comparaison avec une formulation conventionnelle en phase aqueuse et en phase solvantée.

A cet effet, on a réalisé un essai de cure sur une composition hydraulique de type CAN (Chape Auto Nivelante) selon les conditions opératoires de la norme NF P 18-370 avec un dosage de désactivant de 200g/m².

Les résultats sont résumés dans le tableau 3 ci-dessous. On constate que toute chose étant comparable par ailleurs, la formulation sous forme d'émulsion selon l'invention permet d'obtenir un effet de cure très satisfaisant sans utilisation de solvants.

**Tableau 3 : Effet de cure**

| **Formulation de Désactivant** | **Coefficient de protection** [%] | |
|---|---|---|
| | Après 6h | Après 24h |
| Exemple 1 | 60 | 42 |
| Formulation en phase aqueuse | 0 | 0 |
| Formulation en phase solvantée | 91 | 69 |

L'émulsion selon la présente invention, grâce à sa rupture immédiate par simple contact avec la composition hydraulique fraîche, n'émet pas de COV, assure un bon effet de cure sur le béton et laisse une surface sèche et non boueuse. Par ailleurs, l'émulsion selon l'invention est éliminable à sec et ne génère donc pas d'eaux de lavage abondantes, chargées et polluantes. Enfin, l'émulsion selon l'invention peut être éliminée jusqu'à 96h après application, ce qui facilite notablement sa mise en oeuvre.

## Revendications

1. Emulsion constituée d'une phase huileuse dispersée dans une phase aqueuse, comprenant un tensioactif aminé non quaternaire et un acide à effet retardateur de prise de compositions hydrauliques telles le béton ou le mortier, **caractérisée en ce que** le tensioactif aminé non quaternaire est une diamine de formule suivante : 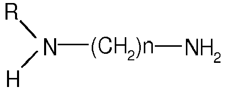 dans laquelle R est une chaîne carbonée saturée ou insaturée, aliphatique ou aromatique, droite ou ramifiée comportant 8 à 22 atomes de carbone, et de préférence 12 à 18 atomes de carbone et n un nombre entier compris entre 1 et 8 et de préférence de 2 à 4 ; et **en ce que** l'émulsion comprend 5 à 40% en poids de phase huileuse.

2. Emulsion selon la revendication 1, dans laquelle l'acide à effet retardateur de prise est un acide carboxylique ou hydroxycarboxylique.

3. Emulsion selon la revendication 1 ou 2, dans laquelle l'acide à effet retardateur de prise est choisi dans le groupe consistant en l'acide acétique, l'acide gluconique, l'acide citrique, l'acide tartrique, l'acide malique, leurs sels et leurs mélanges.

4. Emulsion selon l'une des revendications 1 à 3, dans laquelle le tensioactif aminé non quaternaire est choisi dans le groupe consistant en la diamine de suif, de stéarine, d'oléine, d'huile de coprah, de palme, de colza, de colza érucique ou de soja.

5. Emulsion selon l'une des revendications 1 à 4, comprenant en outre un sucre.

6. Emulsion selon la revendication 5, dans laquelle le sucre est choisi dans le groupe consistant en le glucose, le dextrose, le fructose, le galactose, le saccharose, le maltose, le lactose et le mannose et leurs mélanges.

7. Emulsion selon l'une des revendications 1 à 6, présentant une viscosité à l'écoulement comprise entre 10 et 50 s (temps d'écoulement d'une coupe AFNOR n°4).

8. Procédé de préparation d'une émulsion selon l'une des revendications 1 à 7, comprenant les étapes consistant à :
(i) préparer la phase huileuse comprenant le tensioactif aminé non quaternaire;
(ii) préparer la phase aqueuse comprenant l'acide retardateur de prise ; et
(iii) mélanger des deux phases dans un dispositif adapté jusqu'à obtention d'une émulsion.

9. Procédé de désactivation en surface d'une composition hydraulique, comprenant les étapes consistant à :
(a) mise en forme de la composition hydraulique ;
(b) application sur la surface de la composition hydraulique de l'émulsion selon l'une des revendications 1 à 7, laquelle en se rompant libère la phase huileuse; et
(c) après durcissement de la composition hydraulique, élimination du film formé avec la couche superficielle de composition hydraulique non durcie.

10. Procédé de désactivation selon la revendication 9, dans lequel l'étape (a) est réalisée par coulage.

11. Procédé de désactivation selon la revendication 9 ou 10, dans lequel l'étape (b) est réalisée par pulvérisation.

12. Procédé de désactivation selon l'une des revendications 9 à 11, dans lequel l'étape (c) est réalisée à sec.

13. Utilisation d'une émulsion selon l'une des revendications 1 à 7 pour la désactivation en surface de compositions hydrauliques.

## Patentansprüche

1. Emulsion, die aus einer öligen Phase, die in einer wässerigen Phase dispergiert ist, besteht, mit einem nicht quaternären Amintensid und einer Säure mit Abbindeverzögerungseffekt von hydraulischen Zusammensetzungen wie Beton oder Mörtel, **dadurch gekennzeichnet, dass** das nicht quaternäre Amintensid ein Diamin der folgenden Formel ist: 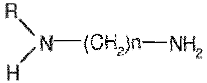 in der R eine gesättigte oder ungesättigte, aliphatische oder aromatische, gerade oder verzweigte Kohlenstoffkette mit 8 bis 22 Kohlenstoffatomen und vorzugsweise 12 bis 18 Kohlenstoffatomen ist und n eine ganze Zahl zwischen 1 und 8 und vorzugsweise 2 bis 4 ist; und dass die Emulsion 5 bis 40 Gewichts-% der öligen Phase umfasst.

2. Emulsion nach Anspruch 1, in der die Säure mit Abbindeverzögerungseffekt eine Carbonsäure oder Hydroxycarbonsäure ist.

3. Emulsion nach Anspruch 1 oder 2, in der die Säure mit Abbindeverzögerungseffekt aus der Gruppe ausgewählt ist, die aus Essigsäure, Gluconsäure, Zitronensäure, Weinsäure, Äpfelsäure, ihren Salzen und ihren Gemischen besteht.

4. Emulsion nach einem der Ansprüche 1 bis 3, in der das nicht quaternäre Amintensid aus der Gruppe ausgewählt ist, die aus dem Diamin von Talg, Stearin, Olein, Kokosöl, Palmöl, Rapsöl, Erucarapsöl oder Sojaöl besteht.

5. Emulsion nach einem der Ansprüche 1 bis 4 mit außerdem einem Zucker.

6. Emulsion nach Anspruch 5, in der der Zucker aus der Gruppe ausgewählt ist, die aus Glucose, Dextrose, Fructose, Galactose, Saccharose, Maltose, Lactose und Mannose und ihren Gemischen besteht.

7. Emulsion nach einem der Ansprüche 1 bis 6, die eine Fließviskosität zwischen 10 und 50 s (Fließzeit einer Fraktion AFNOR Nr. 4) aufweist.

8. Verfahren zur Herstellung einer Emulsion nach einem der Ansprüche 1 bis 7 mit den Schritten, die aus Folgendem bestehen:
(i) Herstellen der öligen Phase mit dem nicht quaternären Amintensid;
(ii) Herstellen der wässerigen Phase mit der Abbindeverzögerungssäure; und
(iii) Mischen der zwei Phasen in einer geeigneten Vorrichtung bis zum Erhalten einer Emulsion.

9. Verfahren zur Oberflächendeaktivierung einer hydraulischen Zusammensetzung mit den Schritten, die aus Folgendem bestehen:
(a) Formung der hydraulischen Zusammensetzung;
(b) Aufbringen der hydraulischen Zusammensetzung der Emulsion nach einem der Ansprüche 1 bis 7 auf die Oberfläche, die sich durch Trennung von der öligen Phase befreit; und
(c) nach Härtung der hydraulischen Zusammensetzung Beseitigung des Films, der mit der Oberflächenschicht der nicht gehärteten hydraulischen Zusammensetzung gebildet wird.

10. Verfahren zur Deaktivierung nach Anspruch 9, in dem der Schritt (a) durch Gießen ausgeführt wird.

11. Verfahren zur Deaktivierung nach Anspruch 9 oder 10, in dem der Schritt (b) durch Zerstäubung ausgeführt wird.

12. Verfahren zur Deaktivierung nach einem der Ansprüche 9 bis 11, in dem der Schritt (c) trocken ausgeführt wird.

13. Verwendung einer Emulsion nach einem der Ansprüche 1 bis 7 für die Oberflächendeaktivierung von hydraulischen Zusammensetzungen.

## Claims

1. An emulsion consisting of an oily phase dispersed in an aqueous phase, comprising a non-quaternary amine surfactant and an acid with a set-retarding effect of hydraulic compositions, such as concrete or mortar, **characterized in that** the non-quaternary amine surfactant is a diamine of the following formula: 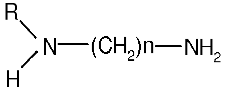 wherein R is a saturated or unsaturated, aliphatic or aromatic, linear or branched carbon chain including 8 to 22 carbon atoms, and preferably 12 to 18 carbon atoms and n is an integer comprised between 1 and 8 and preferably from 2 to 4; and **in that** the emulsion comprises 5 to 40% by weight of oily phase.

2. The emulsion according to claim 1, wherein the acid with a set-retarding effect is a carboxylic or hydroxycarboxylic acid.

3. The emulsion according to claim 1 or 2, wherein the acid with a set-retarding effect is selected from the group consisting in acetic acid, gluconic acid, citric acid, tartaric acid, malic acid, salts and mixtures thereof.

4. The emulsion according to one of claims 1 to 3, wherein the non-quaternary amine surfactant is selected from the group consisting of tallow, stearin, olein, coprah oil, palm oil, rapeseed oil, erucic rapeseed oil or soya bean oil diamine.

5. The emulsion according to one of claims 1 to 4, further comprising a sugar.

6. The emulsion according to claim 5, wherein the sugar is selected from the group consisting in glucose, dextrose, fructose, galactose, saccharose, maltose, lactose and mannose and mixtures thereof.

7. The emulsion according to one of claims 1 to 6, having a flow viscosity comprised between 10 and 50 s (flow time of an AFNOR No. 4 Cut).

8. A method for preparing an emulsion according to one of claims 1 to 7, comprising the steps:
(i) preparing the oily phase comprising the non-quaternary amine surfactant;
(ii) preparing the aqueous phase comprising the set-retarding acid; and
(iii) mixing both phases in a suitable device until an emulsion is obtained.

9. A method for surface retarding of a hydraulic composition, comprising the steps:
(a) shaping the hydraulic composition;
(b) applying onto the surface of the hydraulic composition, the emulsion according to one of claims 1 to 7, which by breaking releases the oily phase; and
(c) after hardening of the hydraulic composition, removing the film formed with the non-hardened hydraulic composition surface layer.

10. The retarding method according to claim 9, wherein step (a) is carried out by casting.

11. The retarding method according to claim 9 or 10, wherein step (b) is carried out by spraying.

12. The retarding method according to one of claims 9 to 11, wherein step (c) is carried out under dry conditions.

13. The use of an emulsion according to one of claims 1 to 7 for surface retarding of hydraulic compositions.
